# EUROPEAN PATENT SPECIFICATION

(11) **EP 4 560 745 B1**
(45) Date of publication and mention of the grant of the patent: **18.03.2026**
(21) Application number: 24172542.3
(22) Date of filing: 25.04.2024
(51) Int. Cl.: H01M 8/0432, H01M 8/04029, H01M 8/04746

(54) **A COOLING SYSTEM FOR A FUEL CELL SYSTEM WITH A HEIGHT-ADJUSTABLE PRESSURE EQUALIZATION DEVICE AND A METHOD OF ADJUSTING A COOLANT PRESSURE**
KÜHLSYSTEM FÜR EIN BRENNSTOFFZELLENSYSTEM MIT HÖHENVERSTELLBARER DRUCKAUSGLEICHSVORRICHTUNG UND VERFAHREN ZUR EINSTELLUNG EINES KÜHLMITTELDRUCKS
SYSTÈME DE REFROIDISSEMENT POUR SYSTÈME DE PILE À COMBUSTIBLE AVEC UN DISPOSITIF D'ÉGALISATION DE PRESSION RÉGLABLE EN HAUTEUR ET PROCÉDÉ DE RÉGLAGE D'UNE PRESSION DE LIQUIDE DE REFROIDISSEMENT

(30) Priority: 23.11.2023 EP 23211860
(43) Date of publication of application: 28.05.2025
(73) Proprietor: VOLVO TRUCK CORPORATION, 405 08 Göteborg (SE)
(72) Inventor: ARYA, Pranav, 412 85 Göteborg (SE); LEMAITRE, Guillaume, 413 20 Göteborg (SE)
(74) Representative: Ström & Gulliksson AB

(56) References cited:
- CN-A- 105 529 487
- JP-B2- 3 589 221
- US-A1- 2003 022 050
- US-A1- 2011 313 606

## Description

### TECHNICAL FIELD

The disclosure relates generally to fuel cells. In particular aspects, the disclosure relates to a cooling system for fuel cell systems wherein the cooling system comprises a pressure equalization device. The disclosure can for example be applied to fuel cell systems for heavy-duty vehicles, such as trucks, buses, and construction equipment, among other vehicle types.

### BACKGROUND

Fuel cell systems are typically cooled by a coolant in a certain pressure range to avoid internal high pressure differences between the coolant, a cathode gas and an anode gas. High pressure differences may lead to damages and loss of performance or leakages. Prior art solutions are marred with various drawbacks such as complex and expensive design.

### SUMMARY

According to a first aspect of the disclosure, there is provided a cooling system for a fuel cell system, the cooling system comprising a cooling circuit, a pressure equalization device for a coolant of the cooling circuit, and a height adjustment assembly for adjusting the height of the pressure equalization device to adjust the coolant pressure.

The first aspect of the disclosure may seek to solve the problem of providing a highly accurate and cost-effective solution for coolant pressure adjustment. The height adjustment assembly enables a simple and accurate adjustment of the pressure of the coolant pressure. Further, since the height of the pressure equalization device is adjustable, the design of the pressure equalization device per se may be relative simple and cost-effective. For example, the pressure equalization device needs not be one of the type that comprises a coolant membrane or similar. The highly accurate pressure adjustment may ensure high fuel cell efficiency and long life.

Optionally in some examples, including in at least one preferred example, the height adjustment assembly is automatic. The automatic height adjustment assembly may result in particularly accurate pressure adjustment, which may take e.g. operation modes of the fuel cell system into account during operation. The height adjustment assembly may also be referred to as an automatic height adjustment assembly. In the present disclosure, the term automatic may mean operated by means of a drive. In more detail, the term automatic may mean operated by means of a drive that is operated by a control unit. The drive may for example be electric, hydraulic or pneumatic.

Optionally in some examples, including in at least one preferred example, the height adjustment assembly comprises an actuator arrangement for adjusting the height of the pressure equalization device. The actuator arrangement may also be referred to as an automatic actuator arrangement.

Optionally in some examples, including in at least one preferred example, the actuator arrangement comprises a drive for adjusting the height of the pressure equalization device. The drive may be connected to a control unit configured to operate the drive.

Optionally in some examples, including in at least one preferred example, the actuator arrangement comprises a support structure that is adapted to hold the height adjustment assembly wherein the drive is adapted to cause the support structure to move. Thereby, a relatively simple and cost-effective solution for adjusting the height of the pressure equalization device may be provided.

Optionally in some examples, including in at least one preferred example, the drive comprises an electric motor. An electric motor may be compact, cost-effective and accurately controllable.

Optionally in some examples, including in at least one preferred example, the drive comprises an electric motor the height adjustment assembly comprises a rack and a pinion. Thereby, a simple and cost-effective solution for adjusting the height of the pressure equalization device may be provided. The rack may be comprised in or constitute the support structure. The pinion may move the rack and thus the support structure vertically. The pinion may be driven by the drive.

Optionally in some examples, including in at least one preferred example, the height adjustment assembly is configured for steplessly adjusting the height of the pressure equalization device. A technical benefit may include accurate coolant pressure adjustment.

Optionally in some examples, including in at least one preferred example, the cooling system comprises, or is connected to, a control unit that is able to identify a coolant pressure requirement of the fuel cell system and is able to operate the height adjustment assembly to adjust the height of the pressure equalization device based on the coolant pressure requirement.

Optionally in some examples, including in at least one preferred example, the cooling system is configured to set the pressure equalization device at a substantially lowest height before or during start-up or warm-up of the fuel cell system. When the pressure equalization device at a substantially lowest height, a coolant flow may be increased or maximized.

Optionally in some examples, including in at least one preferred example, the pressure equalization device is adapted to be connected to an exhaust of the fuel cell system to increase the coolant pressure. By a connection between the exhaust of the fuel cell system and the pressure equalization device, the coolant pressure may be adapted to the exhaust pressure of the fuel cell system. Thereby, a pressure difference between the coolant and other fluids, typically air and fuel, inside the fuel cells may be reduced.

Optionally in some examples, including in at least one preferred example, the pressure equalization device is positioned at the same vertical height or higher than the fuel cell system. In accordance with the present disclosure, the height adjustment assembly allows adjusting the height of the pressure equalization device in relation to the fuel cell system. The height adjustment assembly may allow adjusting the height of the pressure equalization device from a lowest position that is a position at substantially the same vertical height as the fuel cell system. The height adjustment assembly may allow adjusting the height of the pressure equalization device from the lowest position to positions that are higher than the fuel cell system.

The fuel cell system may comprise components that are susceptible to damages as a result of insufficient coolant pressure adjustment. It may be beneficial to adjust the coolant pressure to thereby reduce any pressure difference between the coolant and e.g. hydrogen or air within said pressure difference sensitive components. In addition, under certain conditions, such as during warm-up, a high coolant flow may be desirable to reduce the time required for starting up the fuel cell system. Moreover, a high coolant flow may also be beneficial for aged fuel cell systems, where the heat rejection may be higher. Thus, in some operating modes and in some conditions, it may be beneficial to reduce the coolant pressure to provide the possibility of increasing the coolant flow.

The total pressure of the coolant, which total pressure may result in an undesired pressure difference, is the sum of the coolant static pressure and the coolant dynamic pressure. When the height adjustment assembly is operated to lower the height of the pressure equalization device to lower the coolant static pressure, the coolant dynamic pressure may be allowed to increase while keeping the total coolant pressure at the same level. Thus, when the pressure equalization device is lowered, the coolant flow rate may be increased. Typically, a coolant pump speed may be increased.

A fuel cell system that has been exposed to low temperatures for prolonged duration (e.g. overnight), may need to be warmed up before starting up to ensure that there are no ice plugs leading to blockages. During a warmup phase, typically neither fuel nor air are supplied to the fuel cell system. Therefore, typically, no pressure resulting from a connection to an exhaust of the fuel cell system is added to the pressure equalization device during warm-up. Warm-up of a fuel cell system may involve circulating coolant, typically heated coolant, through the fuel cell system. The higher the flow rate of the coolant, the faster the warm-up. Again, if the pressure equalization device is lowered during warm-up, the coolant flow rate may be increased. In particular, at low temperatures the viscosity of the coolant may be high which leads to a relatively high pressure drop through the cooling circuit. In such a scenario, it may be particularly beneficial to lower the pressure equalization device.

Furthermore, the height adjustment assembly may be beneficial for allowing an increased coolant flow as the fuel cell system reaches the end of life. As a fuel cell system gets older, the efficiency of the system decreases, and more heat is rejected from the system. This may require more cooling and therefore higher coolant flow rate. I addition, piece to piece variations in different components of a fuel cell system may lead to differences in optimum height of the pressure equalization device. A suitable height for the pressure equalization device may be identified using pressure sensors in air, coolant and hydrogen circuits.

In an operating mode that involves a high coolant pressure requirement, such as the fuel cell system operating running at high or maximum output, it may be beneficial to increase the height of the pressure equalization device to increase the coolant static pressure. The resulting increased total coolant pressure may be required to balance high fuel or air pressures. The coolant pump may not be able to increase the dynamic coolant pressure to a sufficient high level to obtain a sufficient total coolant pressure.

The disclosure may provide a cooling system for a vehicle fuel cell system having a fuel cell with passages for air, coolant and fuel. The cooling system comprising a cooling circuit with a pressure equalization device, and comprising a height adjustment assembly that allows the height of the pressure equalization device to be adjusted in relation to the fuel cell, such that the pressure of the coolant may be adapted in dependence of an operating mode of the vehicle fuel cell system.

According to a second aspect of the disclosure, there is provided a vehicle fuel cell system comprising the cooling system.

According to a third aspect of the disclosure, there is provided a vehicle comprising the cooling system or the vehicle fuel cell system.

Optionally in some examples, including in at least one preferred example, the vehicle comprises a control unit that is able to identify a coolant pressure requirement of the fuel cell system and is able to operate the height adjustment assembly to adjust the height of the pressure equalization device based on the coolant pressure requirement.

According to a fourth aspect of the disclosure, there is provided a method of adjusting a coolant pressure of a cooling circuit for a fuel cell system. The method comprises running the fuel cell system and adjusting the coolant pressure by operating a height adjustment assembly for adjusting the height of a pressure equalization device. For example, the height adjustment assembly may be of the type described herein.

Optionally in some examples, including in at least one preferred example, the cooling circuit, for example the pressure equalization device, is connected to an exhaust of the fuel cell system and the method comprises continuously adjusting the coolant pressure by the cooling circuit being connected to the exhaust of the fuel cell system.

Optionally in some examples, including in at least one preferred example, the fuel cell system comprises or is connected to a control unit that is configured to identify a coolant pressure requirement of the fuel cell system and the method comprises obtaining a coolant pressure requirement from the control unit in and on the basis thereof adjusting the coolant pressure by operating the height adjustment assembly.

Optionally in some examples, including in at least one preferred example, the height adjustment assembly is adapted to adjust the height of the pressure equalization device between a lowest height and a highest height, the method comprising adjusting the coolant pressure by operating the height adjustment assembly to set the pressure equalization device substantially at the lowest height before or during start-up or warm-up of the fuel cell system.

Optionally in some examples, including in at least one preferred example, the method comprises adjusting the coolant pressure by operating the height adjustment assembly to set the pressure equalization device at a height that involves a boosted coolant flow before or during start-up or warm-up of the fuel cell system.

Optionally in some examples, including in at least one preferred example, the method comprises identifying an operating mode of the fuel cell system and adjusting the coolant pressure by operating the height adjustment assembly to set the pressure equalization device at a certain height on the basis of the identified operating mode.

Optionally in some examples, including in at least one preferred example, the coolant pressure is adjusted on the basis of the identified operating mode and on basis of an exhaust pressure.

As regards further possible features of the second to fourth aspects, and associated advantages, reference is made to the herein provided description of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic illustration of a cooling system for a fuel cell system according to an example, the system comprising a pressure equalization device and a height adjustment assembly.
**FIG. 2** is a flow chart of an exemplary method of adjusting a coolant pressure of a cooling circuit for a fuel cell system, the method comprising adjusting the coolant pressure by operating a height adjustment assembly similar to the one of **FIG. 1****.**

### DETAILED DESCRIPTION

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

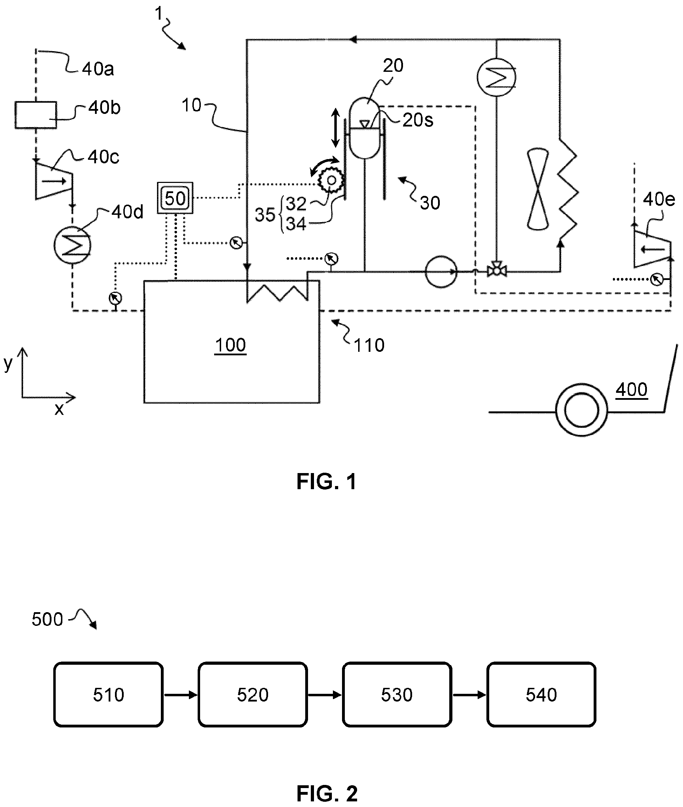

**FIG. 1** shows a cooling system 1 for a fuel cell system 100. Herein, the fuel cell system 100 per se is only schematically depicted and not illustrated or described in detail, as the disclosure primarily relates to cooling thereof. As is illustrated, the cooling system 1 comprises a cooling circuit 10 for cooling the fuel cell system 100. The cooling circuit 10 is illustrated as passing through the fuel cell system 100 to transfer heat by means of schematically illustrated heat changers. Typically, the cooling circuit 10 passes through undepicted fuel cell stacks of the fuel cell system 100 to remove or supply heat. The cooling system 1 may comprise a pump, a radiator and a fan as is illustrated to the right in **FIG. 1****.** There may further be provided a three-way valve and a bypass line for fully or partly bypassing the radiator, e.g. during warm-up, see **FIG. 1****.** As is also illustrated, a heating device may be provided, e.g. in the bypass line, to provide heat to the cooling circuit 10 during warm-up of the fuel cell system 100. Typically, the coolant pressure is adjusted by adjustment of the pump speed, but the present disclosure primarily relates to adjustment of the coolant pressure by means of a pressure equalization device.

In **FIG. 1****,** a solid line (e.g. denoted 10) represents a coolant flow line or cooling circuit. A dashed line represents a cathode supply line and cathode exhaust line, or more generally an air flow line, and a dotted line represents a communication, e.g. a wired or a wireless communication.

As is shown, the cooling system 1 comprises a pressure equalization device 20 for a coolant of the cooling circuit 10. There may be provided one single pressure equalization device 20. As illustrated, the pressure equalization device 20 may be adapted to be connected to an exhaust 110 of the fuel cell systems 100 to increase the pressure of the coolant by means of a pressure of the exhaust.

Referring still to see **FIG. 1****,** the present cooling system comprises a height adjustment assembly 30 for adjusting the height of the pressure equalization device 20. The present height adjustment assembly 30 is automatic, which means that the height of the pressure equalization device 20 is automatically adjustable. The height adjustment is in a vertical direction, as indicated by the y-axis of the coordinate system in **FIG. 1****.** The x-axis of the coordinate system represents ground.

As is indicated by the double-headed arrow, the height adjustment assembly 30 is configured to move the pressure equalization device 20 vertically. The height adjustment assembly 30 is configured to move the pressure equalization device 20 vertically in relation to the fuel cell system 100. As is indicated, the present height adjustment assembly 30 is automatic, i.e. powered by a controlled drive. The height adjustment assembly 30 may comprise an actuator arrangement 35 for adjusting the height of the pressure equalization device 20, i.e. for adjusting the height position of the pressure equalization device 20 in relation to the fuel cell system 100.

As is shown, the present actuator arrangement 35 comprises a drive 32 for adjusting the height of the pressure equalization device 20. Further, the present actuator arrangement 35 comprises a support structure 34 that is adapted to hold the height adjustment assembly 30. The drive 32 is adapted to cause the support structure 34 to move. More precisely, in the present example the height adjustment assembly 30 comprises a rack and a pinion. The rack may be comprised in or constitute the support structure 34. The drive 32 may cause the pinion to rotate such that the rack is raised or lowered. The curved double-headed arrow in **FIG. 1** indicates a rotation of the drive or the pinon. The drive 32 may comprise an electric motor. As is to be apprehended from **FIG. 1****,** the height adjustment assembly 30 may be configured for steplessly adjusting the height of the pressure equalization device 20.

In **FIG. 1****,** the pressure equalization device 20 is positioned in, or close to, a highest position. In a lowest position (not shown), the pressure equalization device 20 may be positioned at the same vertical height as fuel cell system 100.

**FIG. 1** schematically illustrates a control unit 50 that is able to identify a coolant pressure requirement of the fuel cell system 100. The dotted lines show that the control unit 50 may be in direct communication with the fuel cell system 100 and with several components of the cooling system 1. For example, as indicated, the control unit 50 may be in communication with the drive 32.

The cooling system 1 may be configured to set the pressure equalization device 20 at a substantially lowest height before or during start-up or warm-up of the fuel cell system 100. When the control unit 50 received information that the fuel cell system 100 is to be started, the control unit 50 may control the height adjustment assembly 30 to move the pressure equalization device 20 to its lowest position, or a position close to the lowest position, to increase or maximize a coolant flow rate.

Referring to **FIG. 1****,** the fuel cell system 100 and the cooling system 1 may be arranged in a vehicle 400, typically a heavy-duty vehicle.

As has been mentioned, a fuel cell system 100 typically comprises fuel cell stacks (not shown). These typically comprise bipolar plates, electrical connections, inputs and outputs for cathode gas (typically air) and anode gas (such as hydrogen). The bipolar plates may be particularly susceptible to damages as a result of insufficient coolant pressure adjustment. In **FIG. 1****,** the dashed lines illustrate the cathode gas flow to and from the fuel cell system 100. To the left, cathode gas, in this case ambient air, enters into an air intake 40a of the fuel cell system 100. An air filter 40b may as shown be arranged downstream the air intake 40a. Next, the air passes through a blower or a compressor 40c, before passing through an optional supply air cooler 40d and entering into the fuel cell system 100. Inside the fuel cell system 100, the air reacts with the fuel to create electric energy, used e.g. to propel the heavy-duty vehicle 400. The air then exits the fuel cell systems 100 through the fuel cell system exhaust 110. As is shown, a turbine 40e may be arranged to harvest energy from the exhaust 110. The exhaust 110 may, as shown, be connected to the pressure equalization device 20. More precisely, an air flow line may extend from between the exhaust 110 and the turbine to the pressure equalization device 20. There may be undepicted coolant lines connecting the supply air coolers to the cooling circuit 10.

As shown in **FIG. 1****,** the cooling system 1 may comprise at least one pressure sensor (indicated by a circle with an arrow). There may be one pressure sensor arranged to measure the gas pressure at the cathode inlet of the fuel cell system 100, one pressure sensor arranged to measure the gas pressure at the cathode outlet or exhaust 110 (shown at the turbine inlet), one pressure sensor arranged to measure the coolant pressure in the cooling circuit upstream the fuel cell system 100 and one pressure sensor arranged to measure the coolant pressure in the cooling circuit downstream the fuel cell system 100.

Again, the pressure equalization device 20 may be adapted to be connected to an exhaust 110 of the fuel cell system 100 to increase the pressure of the coolant. More precisely, the coolant pressure is adjusted by means of the connection of the pressure equalization device 20 to the exhaust 110. As is shown in **FIG. 1****,** the pressure equalization device 20 may comprise a first, here vertically upper, port for connection to the exhaust 110 and a second, here vertically lower, port for connection to the cooling circuit 10. The first port may be referred to as a cathode gas port and the second port may be referred to as a coolant port. Typically, an upper portion of the pressure equalization device 20 comprises cathode gas and a lower portion of the pressure equalization device 20 contains coolant, which is typically liquid. The coolant level is indicated with a triangle inside the pressure equalization device 20 in **FIG. 1****.** A separator or membrane 20s that separates the coolant from the cathode gas is also illustrated. The membrane may be liquid tight or fluid tight. In undepicted embodiments, the coolant membrane may be dispensed with such that the coolant is in contact with the cathode gas.

A method 500 of adjusting a coolant pressure of a cooling circuit 10 for a fuel cell system 100 is next described with reference to **FIG. 2****.** The method may for example be applied to the herein described fuel cell system 100 and cooling system 1 and to simplify understanding the method is described also with reference to the example of **FIG. 1****.** The method comprises at least one of the steps described below.

The method 500 comprises running 510 the fuel cell system 100, and meanwhile adjusting 540 (also indicated in **FIG. 1**) the coolant pressure by operating a height adjustment assembly 30 for adjusting the height of a pressure equalization device 20. The method 500 may comprise adjusting 520 the coolant pressure by the cooling circuit 10 being connected to the exhaust 110 of the fuel cell system 100. Typically, although not described in detail herein, the coolant pressure is additionally adjusted by adjusting the speed of the coolant pump.

Thus, the coolant pressure may be adjusted in three separate ways, firstly by the coolant pump speed, secondly by the connection the exhaust 110 and thirdly by the height of the pressure equalization device 20 being adjusted.

The height adjustment assembly 30 may be adapted to adjust the height of the pressure equalization device 20 between a lowest height or position and a highest height or position, and the method may comprise adjusting 540 the coolant pressure by operating the height adjustment assembly 30 to set the pressure equalization device 20 substantially at the lowest height before or during start-up or warm-up of the fuel cell system 100.

The method 500 may comprise adjusting 540 the coolant pressure by operating the height adjustment assembly 30 to set the pressure equalization device 20 at a height that involves a boosted coolant flow before or during start-up or-warm-up of the fuel cell system 100. A boosted coolant flow may be a coolant flow that is substantially higher than a nominal flow. Examples of operating modes are warm-up and normal operation (after finalized warm-up). The control unit 50 may identify the operating mode, e.g. based on a temperature such as a coolant temperature.

The method 500 may comprise identifying an operating mode of the fuel cell system 100 and adjusting 540 the coolant pressure by operating the height adjustment assembly 30 to set the pressure equalization device 20 at a certain height on the basis of the identified operating mode. In accordance with the method 500, the coolant pressure may be adjusted on the basis of the identified operating mode and on basis of an exhaust pressure. In addition, as mentioned, the coolant pump speed may adjust the coolant pressure. Examples of operating modes are warm-up and normal operation (after finalized warm-up). The control unit 50 may be adapted to identify an operating mode, e.g. based on a temperature such as a coolant temperature.

A coolant pressure requirement of the fuel cell system 100 may depend on performance and/or state of health of the fuel cell system 100. A coolant pressure requirement of the fuel cell system 100 may increase with load.

Also disclosed are examples according to the following clauses:
1. A cooling system (1) for a fuel cell system (100), the cooling system (1) comprising
   - a cooling circuit (10),
   - a pressure equalization device (20) for a coolant of the cooling circuit, and
   - a height adjustment assembly (30) for adjusting the height of the pressure equalization device (20) to adjust the coolant pressure.
2. The cooling system (1) of clause 1, wherein the height adjustment assembly (30) is automatic.
3. The cooling system (1) of clause 1 or 2, wherein the height adjustment assembly (30) comprises an actuator arrangement (35) for adjusting the height of the pressure equalization device (20).
4. The cooling system (1) of clause 3, wherein the actuator arrangement (35) comprises a drive (32) for adjusting the height of the pressure equalization device (20).
5. The cooling system (1) of clause 4, wherein the actuator arrangement (35) comprises a support structure (34) that is adapted to hold the height adjustment assembly (30) and the drive (32) is adapted to cause the support structure (34) to move.
6. The cooling system (1) of clause 4 or 5, wherein the drive (32) comprises an electric motor.
7. The cooling system (1) according to any of clauses 3 to 6, wherein the height adjustment assembly (30) comprises a rack and a pinion.
8. The cooling system (1) of any preceding clause, wherein the height adjustment assembly (30) is configured for steplessly adjusting the height of the pressure equalization device (20).
9. The cooling system (1) of any preceding clause, comprising or connected to a control unit (50) that is able to identify a coolant pressure requirement of the fuel cell system (100) and is able to operate the height adjustment assembly (30) to adjust the height of the pressure equalization device (20) based on the coolant pressure requirement.
10. The cooling system (1) of any preceding clause, configured to set the pressure equalization device (20) at a substantially lowest height before or during start-up and/or warm-up of the fuel cell system (100).
11. The cooling system (1) of any preceding clause, wherein the pressure equalization device (20) is adapted to be connected to an exhaust (110) of the fuel cell system (100) to increase the coolant pressure.
12. The cooling system (1) of any preceding clause, wherein the pressure equalization device (20) is positioned at the same vertical height or higher than the fuel cell system (100).
13. A vehicle (400) comprising the cooling system (1) of any preceding clause.
14. The vehicle (400) of clause 13, comprising a control unit (50) that is able to identify a coolant pressure requirement of the fuel cell system (100) and is able to operate the height adjustment assembly (30) to adjust the height of the pressure equalization device (20) based on the coolant pressure requirement.
15. A method (500) of adjusting a coolant pressure of a cooling circuit (10) for a fuel cell system (100), the method (500) comprising
   - running (510) the fuel cell system (100) and
   - adjusting (540) the coolant pressure by operating a height adjustment assembly (30) for adjusting the height of a pressure equalization device (20).
16. The method (500) of clause 15, wherein the cooling circuit (10) is connected to an exhaust (110) of the fuel cell system (100), the method (500) comprising
   - continuously adjusting (520) the coolant pressure by the cooling circuit (10) being connected to the exhaust (110) of the fuel cell system (100).
17. The method (500) of clause 15 or 16, wherein the fuel cell system (100) comprises or is connected to a control unit (50) that is configured to identify a coolant pressure requirement of the fuel cell system (100), the method (500) comprising
   - obtaining (530) a coolant pressure requirement from the control unit (50) in and on the basis thereof adjusting (540) the coolant pressure by operating the height adjustment assembly (30).
18. The method (500) according to any of clauses 15 to 17, wherein the height adjustment assembly (30) is adapted to adjust the height of the pressure equalization device (20) between a lowest height and a highest height, the method comprising adjusting (540) the coolant pressure by operating the height adjustment assembly (30) to set the pressure equalization device (20) substantially at the lowest height before or during start-up and/or warm-of the fuel cell system (100).
19. The method (500) according to any of clauses 15 to 18, comprising adjusting (540) the coolant pressure by operating the height adjustment assembly (30) to set the pressure equalization device (20) at a height that involves a boosted coolant flow before or during start-up and/or warm-up of the fuel cell system (100).
20. The method (500) according to any of clauses 15 to 19, comprising identifying an operating mode of the fuel cell system (100) and adjusting (540) the coolant pressure by operating the height adjustment assembly (30) to set the pressure equalization device (20) at a certain height on the basis of the identified operating mode.
21. The method (500) of clauses 15 and 20, wherein the coolant pressure is adjusted on the basis of the identified operating mode and on basis of an exhaust pressure.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cooling system (1) for a fuel cell system (100), the cooling system (1) comprising
- a cooling circuit (10),
- a pressure equalization device (20) for a coolant of the cooling circuit, and
- a height adjustment assembly (30) for adjusting the height of the pressure equalization device (20) to adjust the coolant pressure.

2. The cooling system (1) of claim 1, wherein the height adjustment assembly (30) is automatic.

3. The cooling system (1) of claim 1 or 2, wherein the height adjustment assembly (30) comprises an actuator arrangement (35) for adjusting the height of the pressure equalization device (20).

4. The cooling system (1) of claim 3, wherein the actuator arrangement (35) comprises a drive (32) for adjusting the height of the pressure equalization device (20).

5. The cooling system (1) of claim 4, wherein the actuator arrangement (35) comprises a support structure (34) that is adapted to hold the height adjustment assembly (30) and the drive (32) is adapted to cause the support structure (34) to move.

6. The cooling system (1) of claim 4 or 5, wherein the drive (32) comprises an electric motor.

7. The cooling system (1) of any preceding claim, wherein the height adjustment assembly (30) is configured for steplessly adjusting the height of the pressure equalization device (20).

8. The cooling system (1) of any preceding claim, comprising or connected to a control unit (50) that is able to identify a coolant pressure requirement of the fuel cell system (100) and is able to operate the height adjustment assembly (30) to adjust the height of the pressure equalization device (20) based on the coolant pressure requirement.

9. The cooling system (1) of any preceding claim, configured to set the pressure equalization device (20) at a substantially lowest height before or during start-up of the fuel cell system (100).

10. The cooling system (1) of any preceding claim, wherein the pressure equalization device (20) is adapted to be connected to an exhaust (110) of the fuel cell system (100) to increase the coolant pressure.

11. A vehicle (400) comprising the cooling system (1) of any preceding claim.

12. A method (500) of adjusting a coolant pressure of a cooling circuit (10) for a fuel cell system (100), the method (500) comprising
- running (510) the fuel cell system (100) and
- adjusting (540) the coolant pressure by operating a height adjustment assembly (30) for adjusting the height of a pressure equalization device (20).

13. The method (500) of claim 12, wherein the cooling circuit (10) is connected to an exhaust (110) of the fuel cell system (100), the method (500) comprising
- continuously adjusting (520) the coolant pressure by the cooling circuit (10) being connected to the exhaust (110) of the fuel cell system (100).

14. The method (500) of claim 12 or 13, wherein the fuel cell system (100) comprises or is connected to a control unit (50) that is configured to identify a coolant pressure requirement of the fuel cell system (100), the method (500) comprising
- obtaining (530) a coolant pressure requirement from the control unit (50) in and on the basis thereof adjusting (540) the coolant pressure by operating the height adjustment assembly (30).

15. The method (500) according to any of claims 12 to 14, wherein the height adjustment assembly (30) is adapted to adjust the height of the pressure equalization device (20) between a lowest height and a highest height, the method comprising adjusting (540) the coolant pressure by operating the height adjustment assembly (30) to set the pressure equalization device (20) substantially at the lowest height before or during start-up or warm-up of the fuel cell system (100).

## Patentansprüche

1. Kühlsystem (1) für ein Brennstoffzellensystem (100), das Kühlsystem (1) Folgendes umfassend
- einen Kühlkreislauf (10),
- eine Druckausgleichsvorrichtung (20) für ein Kühlmittel des Kühlkreislaufs, und
- eine Höheneinstelleinheit (30) zum Einstellen der Höhe der Druckausgleichsvorrichtung (20), um den Kühlmitteldruck einzustellen.

2. Kühlsystem (1) nach Anspruch 1, wobei die Höheneinstelleinheit (30) automatisch ist.

3. Kühlsystem (1) nach Anspruch 1 oder 2, wobei die Höheneinstelleinheit (30) eine Aktuatoranordnung (35) zum Einstellen der Höhe der Druckausgleichsvorrichtung (20) umfasst.

4. Kühlsystem (1) nach Anspruch 3, wobei die Aktuatoranordnung (35) einen Antrieb (32) zum Einstellen der Höhe der Druckausgleichsvorrichtung (20) umfasst.

5. Kühlsystem (1) nach Anspruch 4, wobei die Aktuatoranordnung (35) eine Halterungsstruktur (34) umfasst, die angepasst ist, um die Höheneinstelleinheit (30) zu halten, und der Antrieb (32) angepasst ist, um zu bewirken, dass sich die Halterungsstruktur (34) bewegt.

6. Kühlsystem (1) nach Anspruch 4 oder 5, wobei der Antrieb (32) einen Elektromotor umfasst.

7. Kühlsystem (1) nach einem der vorherigen Ansprüche, wobei die Höheneinstelleinheit (30) konfiguriert ist, um die Höhe der Druckausgleichsvorrichtung (20) stufenlos einzustellen.

8. Kühlsystem (1) nach einem der vorherigen Ansprüche, das eine Steuereinheit (50) umfasst oder damit verbunden ist, die in der Lage ist, einen Kühlmitteldruckbedarf des Brennstoffzellensystems (100) zu identifizieren und die Höheneinstelleinheit (30) zu betätigen, um die Höhe der Druckausgleichsvorrichtung (20) basierend auf dem Kühlmitteldruckbedarf einzustellen.

9. Kühlsystem (1) nach einem der vorherigen Ansprüche, das konfiguriert ist, um die Druckausgleichsvorrichtung (20) vor oder während einer Inbetriebnahme des Brennstoffzellensystems (100) auf eine im Wesentlichen niedrigste Höhe einzustellen.

10. Kühlsystem (1) nach einem der vorherigen Ansprüche, wobei die Druckausgleichsvorrichtung (20) angepasst ist, um mit einem Auslass (110) des Brennstoffzellensystems (100) verbunden zu werden, um den Kühlmitteldruck zu erhöhen.

11. Fahrzeug (400), umfassend das Kühlsystem (1) nach einem der vorherigen Ansprüche.

12. Verfahren (500) zum Einstellen eines Kühlmitteldrucks eines Kühlkreislaufs (10) für ein Brennstoffzellensystem (100), das Verfahren (500) umfassend
- ein Betreiben (510) des Brennstoffzellensystems (100), und
- ein Einstellen (540) des Kühlmitteldrucks durch Betätigen einer Höheneinstelleinheit (30) zum Einstellen der Höhe einer Druckausgleichsvorrichtung (20).

13. Verfahren (500) nach Anspruch 12, wobei der Kühlkreislauf (10) mit einem Auslass (110) des Brennstoffzellensystems (100) verbunden ist, das Verfahren (500) umfassend
- ein kontinuierliches Einstellen (520) des Kühlmitteldrucks durch den Kühlkreislauf (10), der mit dem Auslass (110) des Brennstoffzellensystems (100) verbunden ist.

14. Verfahren (500) nach Anspruch 12 oder 13, wobei das Brennstoffzellensystem (100) eine Steuereinheit (50) umfasst oder damit verbunden ist, die konfiguriert ist, um einen Kühlmitteldruckbedarf des Brennstoffzellensystems (100) zu identifizieren, das Verfahren (500) umfassend
- Erlangen (530) einer Kühlmitteldruckanforderung von der Steuereinheit (50) und basierend darauf Einstellen (540) des Kühlmitteldrucks durch Betätigen der Höheneinstelleinheit (30).

15. Verfahren (500) nach einem der Ansprüche 12 bis 14, wobei die Höheneinstelleinheit (30)angepasst ist, um die Höhe der Druckausgleichsvorrichtung (20) zwischen einer niedrigsten Höhe und einer höchsten Höhe einzustellen, das Verfahren umfassend ein Einstellen (540) des Kühlmitteldrucks durch Betätigen der Höheneinstelleinheit (30), um die Druckausgleichsvorrichtung (20) vor oder während einer Inbetriebnahme oder Aufwärmung des Brennstoffzellensystems (100) im Wesentlichen auf die niedrigste Höhe einzustellen.

## Revendications

1. Système de refroidissement (1) pour un système de pile à combustible (100), le système de refroidissement (1) comprenant
- un circuit de refroidissement (10),
- un dispositif d'égalisation de la pression (20) pour un liquide de refroidissement du circuit de refroidissement, et
- un ensemble de réglage de la hauteur (30) pour ajuster la hauteur du dispositif d'égalisation de la pression (20) afin d'ajuster la pression du liquide de refroidissement.

2. Système de refroidissement (1) selon la revendication 1, dans lequel l'ensemble de réglage de la hauteur (30) est automatique.

3. Système de refroidissement (1) selon la revendication 1 ou 2, dans lequel l'ensemble de réglage de la hauteur (30) comprend un dispositif d'actionnement (35) pour régler la hauteur du dispositif d'égalisation de la pression (20).

4. Système de refroidissement (1) selon la revendication 3, dans lequel le dispositif d'actionnement (35) comprend un entraînement (32) pour ajuster la hauteur du dispositif d'égalisation de la pression (20).

5. Système de refroidissement (1) selon la revendication 4, dans lequel le dispositif d'actionnement (35) comprend une structure de support (34) qui est adaptée pour maintenir l'ensemble de réglage de la hauteur (30) et l'entraînement (32) est adapté pour provoquer le déplacement de la structure de support (34).

6. Système de refroidissement (1) selon la revendication 4 ou 5, dans lequel l'entraînement (32) comprend un moteur électrique.

7. Système de refroidissement (1) selon l'une quelconque des revendications précédentes, dans lequel l'ensemble de réglage de la hauteur (30) est configuré pour régler en continu la hauteur du dispositif d'égalisation de la pression (20).

8. Système de refroidissement (1) selon l'une quelconque des revendications précédentes, comprenant ou relié à une unité de commande (50) capable d'identifier un besoin en pression de liquide de refroidissement du système de pile à combustible (100) et capable d'actionner l'ensemble de réglage de la hauteur (30) pour ajuster la hauteur du dispositif d'égalisation de la pression (20) en fonction du besoin en pression de liquide de refroidissement.

9. Système de refroidissement (1) selon l'une quelconque des revendications précédentes, configuré pour placer le dispositif d'égalisation de la pression (20) à une hauteur sensiblement la plus basse avant ou pendant le démarrage du système de pile à combustible (100).

10. Système de refroidissement (1) selon l'une quelconque des revendications précédentes, dans lequel le dispositif d'égalisation de la pression (20) est adapté pour être connecté à un échappement (110) du système de pile à combustible (100) afin d'augmenter la pression du liquide de refroidissement.

11. Véhicule (400) comprenant le système de refroidissement (1) selon l'une quelconque des revendications précédentes.

12. Procédé (500) de réglage de la pression du liquide de refroidissement d'un circuit de refroidissement (10) pour un système de pile à combustible (100), le procédé (500) comprenant
- la mise en fonctionnement (510) du système de pile à combustible (100) et
- le réglage (540) de la pression du liquide de refroidissement en actionnant un ensemble de réglage de la hauteur (30) pour régler la hauteur d'un dispositif d'égalisation de la pression (20).

13. Procédé (500) selon la revendication 12, dans lequel le circuit de refroidissement (10) est relié à un échappement (110) du système de pile à combustible (100), le procédé (500) comprenant
- le réglage en continu (520) de la pression de liquide de refroidissement par le circuit de refroidissement (10) relié à l'échappement (110) du système de pile à combustible (100).

14. Procédé (500) selon la revendication 12 ou 13, dans lequel le système de pile à combustible (100) comprend ou est connecté à une unité de commande (50) qui est configurée pour identifier un besoin de pression de refroidissement du système de pile à combustible (100), le procédé (500) comprenant
- l'obtention (530) d'une demande de pression de liquide de refroidissement de l'unité de commande (50) et, sur cette base, l'ajustement (540) de la pression de liquide de refroidissement en actionnant l'ensemble de réglage de la hauteur (30).

15. Procédé (500) selon l'une quelconque des revendications 12 à 14, dans lequel l'ensemble de réglage de la hauteur (30) est adapté pour régler la hauteur du dispositif d'égalisation de la pression (20) entre une hauteur minimale et une hauteur maximale, le procédé consistant à régler (540) la pression du liquide de refroidissement en faisant fonctionner l'ensemble de réglage de la hauteur (30) pour placer le dispositif d'égalisation de la pression (20) sensiblement à la hauteur minimale avant ou pendant le démarrage ou le préchauffage du système de pile à combustible (100).
